# EUROPEAN PATENT SPECIFICATION

(11) **EP 2 911 215 B1**
(45) Date of publication and mention of the grant of the patent: **30.11.2016**
(21) Application number: 13848349.0
(22) Date of filing: 11.10.2013
(51) Int. Cl.: H01M 2/10, H01M 2/20, H01M 10/42, H01R 11/28, B60L 11/18, H01M 10/48

(54) **ASSEMBLED BATTERY AND MANUFACTURING METHOD THEREOF**
ZUSAMMENGESETZTE BATTERIE UND HERSTELLUNGSVERFAHREN DAFÜR
BATTERIE ASSEMBLÉE ET SON PROCÉDÉ DE FABRICATION

(30) Priority: 22.10.2012 JP 2012232645
(43) Date of publication of application: 26.08.2015
(73) Proprietor: Sanyo Electric Co., Ltd., Moriguchi-shi, Osaka 570-8677 (JP)
(72) Inventor: YONEDA, Haruhiko, Osaka-shi Osaka 540-6207 (JP); YAMAGAMI, Sadao, Osaka-shi Osaka 540-6207 (JP); HAINO, Masami, Osaka-shi Osaka 540-6207 (JP)
(74) Representative: Grünecker Patent- und Rechtsanwälte PartG mbB
(86) International application number: PCT/JP2013/006089
(87) International publication number: WO 2014/064900

(56) References cited:
- EP-A2- 2 343 752
- JP-A- 2005 317 460
- JP-A- 2011 009 477
- JP-A- 2011 065 794
- JP-A- 2011 243 426
- US-A1- 2011 027 622

## Description

### TECHNICAL FIELD

The present invention is related to a battery pack and a method for manufacturing the same, especially, the battery pack which comprises a battery unit in which plural cell groups are connected in series, and a protection circuit board.

### BACKGROUND ART

As a battery pack for an electric bicycle, an electric vehicle, a working robot, or the like, the battery pack shown in patent literature 1 has been developed. This battery pack comprises a battery unit in which plural battery cells are connected, a protection circuit board including a protection circuit, and those are stored in a case made of resin or the like.

In this type of the battery pack, the battery unit has a battery holder which holds the plural battery cells in a shape of block, and plural cell groups are connected in series by lead plates, and then the output of a high voltage is obtained. This type of the battery pack is often used.

Further, the battery pack shown in patent literature 1 has a circuit unit which stores a circuit board including an IC for a protection circuit within a board holder. And the circuit unit is disposed on the surface of the battery unit, and is fixed to the battery holder.

By the way, in the battery pack in which the cell groups are connected in series, at the time of charging and discharging, the protection circuit board checks not only the voltage between both ends of the series-connected cell groups but also intermediate electric potentials, and controls so as to prevent each of the battery from over charge or over discharge based on it.

In order that the intermediate electric potentials are inputted into the protection circuit board, in the battery pack shown in patent literature1, each of input terminals of the IC on the protection circuit board are connected to lead plates between the cell groups through lead wires between the protection circuit board and the battery unit.

### Citation List

### Patent Literature

Patent Literature 1: Japanese Laid-Open Patent Publication No. 2010-277795
Patent Literature 2: Japanese Laid-Open Patent Publication No. 2011-243426

### SUMMARY OF THE INVENTION

When the battery pack in which the protection circuit board checks the intermediate electric potentials is manufactured, the battery unit and the protection circuit board are manufactured, and the input terminals and the lead plates showing the intermediate electric potentials in the battery unit are connected by the lead wire or the like.

In a connecting step by this lead wire, for example, after one end portion of each of the lead wires is connected to the protection circuit board side, the protection circuit board is set to the battery unit, and the other end portion of each of the lead wires is connected to the corresponding tap portion of the lead plate in the battery unit by engaging each other.

In the connecting step in which the tap portions of the battery unit are connected to the terminals of the protection circuit board by such plural lead wires, in order not to applying a high voltage to the IC of the protection circuit board, it is necessary that the lead wires are connected to the tap portions of the lead plates in the battery unit in electric potential order.

Therefore, connecting step of the protection circuit board and the lead plates by the plural lead wires is done by manual procedures, and then its step is troublesome.

The present disclosure is developed for the purpose of solving such drawbacks. One non-limiting and explanatory embodiment provides that in a battery pack having a battery unit in which plural cell groups are connected in series, and a protection circuit board to protect by detecting intermediate electric potentials, tap portions of lead plates in the battery unit and terminals of the protection circuit board are easily connected.

The present disclosure has the following configuration.

### [1] Battery Pack

A battery pack of the present disclosure comprises all the features of claim 1.

### [2] Method for Manufacturing Battery Pack

A method for manufacturing a battery pack of the present disclosure comprises a step of manufacturing a battery unit which comprises a cell assembly which is constituted in a state that the positive terminals and the negative terminals of the plural battery cells are horizontally disposed, and plural lead plates being connected to positive terminals and negative terminal of the plural battery cells of the cell assembly, and in which the battery cells in cell groups are connected in parallel through the plural lead plates and the cell groups are connected in series, a step of manufacturing a protection circuit board being mounted on one surface of the cell assembly, and a step of setting the protection circuit board on the one surface of the cell assembly, and in the battery unit manufactured in the step of manufacturing the battery unit, each of the lead plates extended toward the one surface as each of tap portions, and each of the tap portions is disposed such that electric potentials of the tap portions are arranged in increasing order or decreasing order in one direction, and the protection circuit board manufactured in the step of manufacturing the protection circuit board, has plural input terminals arranged in the one direction corresponding to each of the tap portions, and the step of setting the protection circuit board further comprises a sub-step of pivotally coupling in which the protection circuit board and the battery unit are pivotally coupled at an end portion in the one direction as an axis in spaced relationship with each other, and a sub-step of rotating in which the protection circuit board is set by rotating the protection circuit board pivotally coupled, and in the sub-step of pivotally coupling, the input terminal closest to the axis is connected to the corresponding tap portion, and in the sub-step of rotating, the other input terminals are connected to the corresponding tap portions in the order of the electric potentials.

Accordingly, when this battery pack is assembled, while the protection circuit board is rotated around the axis, and is set, each of the input terminals can contact the tap portion of the corresponding lead plate in the order from one close to the axis.

Therefore, each of the input terminals in the protection circuit board can be easily connected to the corresponding lead plate in the order of the electrical potential.

In the above battery pack, the following structures can be used.

In the pivotable structure the battery unit and the protection circuit board are pivotally coupled by an axis perpendicular to the one direction along the one surface.

The plural input terminals have lead pins, and the input terminals are electrically connected to the tap portions corresponding thereto through the lead pins.

Here, the tap portions corresponding to the lead pins has notch portions in which the lead pins are inserted respectively.

By this, according to setting the protection circuit board, each of the lead pins is press-fitted into the notch portion of the tap portion, connection between the lead pin and the tap portion is surely carried out.

The notch portions provided at the tap portions are formed in such a way as inclining in the direction that the notch portions are narrowed as going from the one surface side to the battery cells side.

Therefore, the lead pins are guided, and are inserted into the notch portions, and after the insertion, the lead pins are press-fitted into the notch portions, and connection can be surely carried out.

The battery unit has a battery holder which holds the cell assembly, and the protection circuit board is set to a board holder to hold the protection circuit board, and a pivot portion is provided at the board holder and a bearing portion is provided at the battery holder such that the pivot portion is pivotally coupled thereto. Therefore, the above pivotally coupling can be easily carried out.

Here, the board holder has rib portions which guide the lead pins into locations for contacting the tap portions corresponding to the lead pins respectively.

The cell assembly is constituted in a state that the positive terminals and the negative terminals of the plural battery cells are horizontally disposed, and the plural lead plates are disposed at side surfaces where the positive terminals and the negative terminals are exposed, and the cell groups where the same number of the battery cells are connected in parallel are connected in series through the plural lead plates, and the one surface of the cell assembly is adjacent to the side surfaces, and the protection circuit board carries out protection of a battery circuit by inputting the electrical potential in each of the lead plates.

The plural battery cells which constitute the cell assembly, comprises a first group in which the positive terminals are exposed at a first side surface of the side surfaces, and a second group in which the negative terminals are exposed at the first side surface, and the plural lead plates are disposed at the first side surface of the cell assembly and a second side surface facing the first side surface, and the one surface is adjacent to the first side surface and the second side surface between both side surfaces.

In this case, the tap portions which extend from the plural lead plates and are provided, are arranged along both side edges of the one surface in the order of the electrical potential in the one direction, and also in the protection circuit board, the plural input terminals corresponding to the tap portion of the battery unit are arranged along both side surfaces in the one direction.

Further, as the plural lead plates are disposed, being divided into both the first side surface and the facing second side surface, and the protection circuit board is set on the one surface between both side surfaces, the battery pack can be compact.

Here, in the battery cells belonging to the first group, each of the cell group has the equal number of the battery cells, and the first group has N (N is an integer of 1 or more) pieces of the cell groups, and in the battery cells belonging to the second group, each of the cell group has an equal number of the battery cells, and the second group has N+1 pieces of the cell groups, and in the first side surface, the negative terminals of the cell group having a minimum electric potential of the second group, are connected to one piece of the lead plate, and the positive terminals in N pieces of the cell groups belonging to the first group and the negative terminals in N pieces of the cell groups belonging to the second group are connected through one common piece of the lead plate by each of the cell groups, and in the second side surface facing the first side surface, the positive terminals of the cell group having the maximum electric potential, are connected to one piece of the lead plate, and the positive terminals in N pieces of the cell groups belonging to the first group and the negative terminals in N pieces of the cell groups belonging to the second group are connected through one common piece of the lead plate by each of the cell groups.

### [2] Method for Manufacturing Battery Pack

A method for manufacturing a battery pack of the present disclosure comprises a step of manufacturing a battery unit which comprises a cell assembly having plural battery cells, and plural lead plates being connected to positive terminals and negative terminal of the plural battery cells of the cell assembly, and in which the battery cells in cell groups are connected in parallel through the plural lead plates and the cell groups are connected in series, a step of manufacturing a protection circuit board being mounted on one surface of the cell assembly, and a step of setting the protection circuit board on the one surface of the cell assembly, and in the battery unit manufactured in the step of manufacturing the battery unit, each of the lead plates extended toward the one surface as each of tap portions, and each of the tap portions is disposed such that electric potentials of the tap portions are arranged in increasing order or decreasing order in one direction, and the protection circuit board manufactured in the step of manufacturing the protection circuit board, has plural input terminals arranged in the one direction corresponding to each of the tap portions, and the step of setting the protection circuit board further comprises a sub-step of pivotally coupling in which the protection circuit board and the battery unit are pivotally coupled at an end portion in the one direction as an axis in spaced relationship with each other, and a sub-step of rotating in which the protection circuit board is set by rotating the protection circuit board pivotally coupled, and in the sub-step of pivotally coupling, the input terminal closest to the axis is connected to the corresponding tap portion, and in the sub-step of rotating, the other input terminals are connected to the corresponding tap portions in the order of the electric potentials.

Therefore, in this method for manufacturing, in the step of setting, according to rotating the protection circuit board pivotally coupled, each of the input terminals of the protection circuit board can be connected to each of the corresponding tap portions in the order of the electrical potential.

In the above method for manufacturing the battery pack, the followings can be used.

In the step of manufacturing the protection circuit board, connecting members are provided at, and are extended from each of the input terminals except for the input terminal closest to the axis, and in the sub-step of rotating, the connecting member connected to each of the input terminals is connected to the corresponding tap portion in the order of the electric potentials.

In the step of manufacturing the protection circuit board, the connecting members connected to the input terminals include lead pins, and the tap portions of the lead plates used in the step of manufacturing the battery unit have notches corresponding to the lead pins, and in the sub-step of rotating, according to rotating the protection circuit board, electrical connections are carried out by press-fitting the corresponding lead pins into the notch in each of the tap portions.

By this, connections between the lead pins and the tap portion are surely carried out.

In the step of manufacturing the protection circuit board, a board holder to hold the protection circuit board is set to the protection circuit board including electric parts, and a pivot portion is provided at the board holder, and in the step of manufacturing the battery unit, the battery unit is made by using a battery holder to hold the plural cell groups, and a bearing portion is provided at the battery holder.

Accordingly, in the sub-step of pivotally coupling, the pivot portion is press-fitted into the bearing portion, and then is pivotally coupled.

In the step of manufacturing the battery unit, an inner surface of the bearing portion formed at the battery holder is partially opened, and in the sub-step of pivotally coupling, the pivot portion is inserted into through an opening portion of the inner surface.

### BRIEF DESCRIPTION OF DRAWINGS

FIG. 1 is an external appearance perspective view showing a core pack 1
FIG. 2 is an explored perspective view showing a configuration of the core pack 1.
FIG. 3 is an external appearance perspective view of a battery unit 10 included in the core pack 1.
FIG. 4(a), (b) are figures which shows and explains connecting state of battery cells 3 included in a cell assembly 30.
FIG. 5 is a perspective view showing a structure of a circuit unit 20.
FIG. 6 is a figure showing connecting portions in the battery unit 10 and the circuit 20.
FIG. 7(a), (b) are enlarged views of a bearing portion 52, and (c), (d) are enlarged views of a bearing portion 53.
FIG. 8 is a perspective view showing a step that the circuit unit 20 is pivotally coupled to the battery unit 10.
FIG. 9(a)-(d) are views showing the step of setting the circuit unit 20 to the battery unit 10.
FIG. 10(a) is a side view showing a state that lead pins are connected to tap portions in order according to setting the circuit unit 20, and (b) is its explanation figure.
FIG. 11 (a) is a perspective view showing a state that the lead pins contact the tap portion in order, and (b) is its explanation figure.
FIG. 12(a) is an enlarged plan view in case that the vicinity of the lead pins 203, 205 in the circuit unit 20 is seen from above, and (b), (c) are sectional views in case that the vicinity of the lead pin 203 is seen from back.

### DESCRIPTION OF EMBODIMENTS

The following describes embodiments of the present invention based on the figures. However, embodiments in the following description are used as examples to easily understand the structure, operation, and results of the present invention, and the present invention is in no way limited to those embodiments.

### [Embodiment]

### 1. Whole Structure of Battery Pack

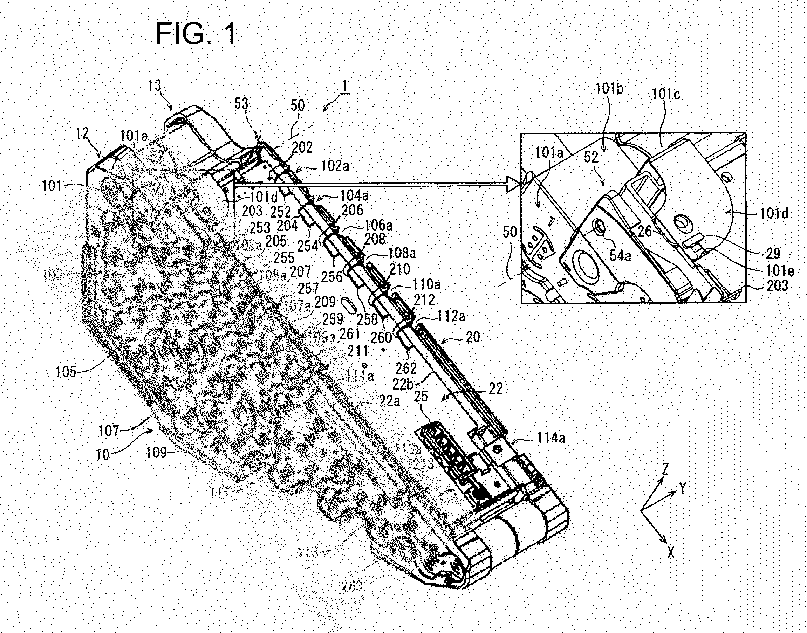

FIG. 1 is an external appearance perspective view showing a core pack 1 of a battery pack. In this battery pack, the core pack 1 is stored in an outer case (not shown in figures), and is used as a power source of an electric vehicle.

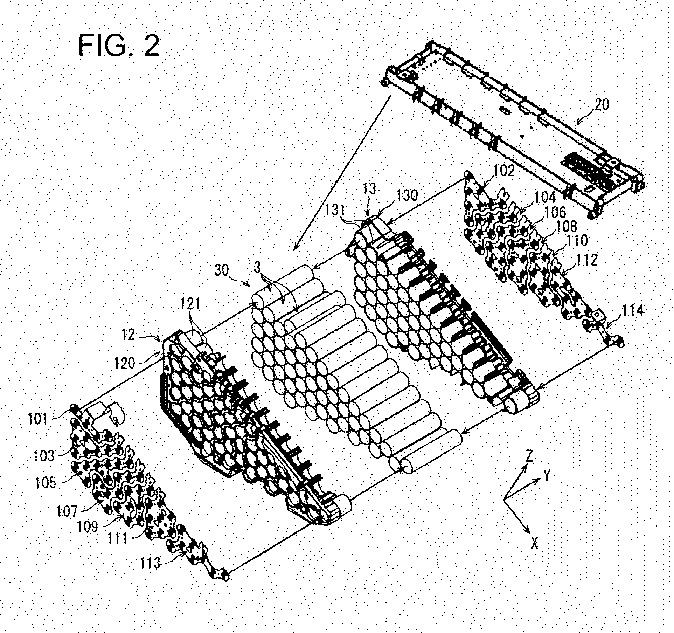

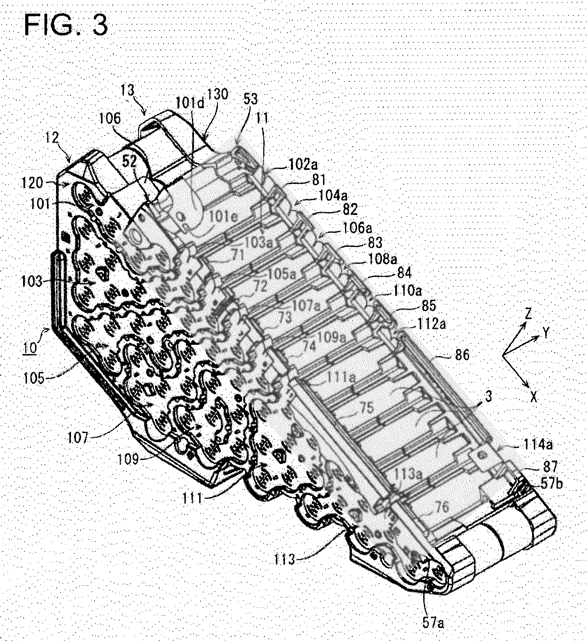

FIG. 2 is an explored perspective view of the core pack 1. FIG. 3 is an external appearance perspective view of a battery unit 10.

The core pack 1 comprises the battery unit 10, and a circuit unit 20 which is set to the battery unit 10.

The battery unit 10 has a cell assembly 30 in which plural battery cells 3 are disposed in a block shape (approximately triangular prism shape). In this cell assembly 30, plural cell groups 31A-31M are connected in series by plural lead plates 101-114 disposed at side surfaces (right and left triangular shape side surface portions) among its surfaces where positive terminals and negative terminals of the battery cells 3 are exposed.

A circuit unit 20 comprises a protection circuit board 22, and a board holder 21which holds the protection circuit board 22. The circuit unit 20 has a flat board shape, and is set on a setting surface 11 (refer to FIG. 3) of the battery unit 10, and be assembled. This setting surface 11 is adjacent to outer surfaces of side board portions 120, 130 where the plural lead plates 101-114 are disposed, in surfaces of the cell assembly 30. The setting surface 11 is along X-Y plane, and the side board portions 120, 130 are along X-Z plane, and then the setting surface 11 is perpendicular to the side board portions 120, 130.

In this way, as the circuit unit 20 is set on the setting surface 11 between both side surfaces where the lead plates 101-114 are disposed in the battery unit 10, the structure of the core pack 1 is compact.

The circuit unit 20 includes a protection circuit into which an electric potential of the lead plate 101 of lowest electric potential, and electric potentials of the lead plates 102-113 corresponding to the number of the series-connected cell groups are inputted, and which protects the battery unit 10 based on inputted electric potentials

In explanation, an elongated direction of the setting surface 11 is a front - back direction (an arrow X is a back direction in the figures), and a short side direction of the setting surface 11 is a right and left direction (an arrow Y is a left direction in the figures), and a perpendicular direction to the setting surface 11 is an upper-lower direction (an arrow Z is a upper direction in the figures).

### 2. Battery Unit 10

As shown in FIG. 2, a plurality (52 pieces) of the battery cells 3 which the battery unit 10 includes, are arranged in parallel in a state that axes of the battery cells 3 of a cylindrical shape are along the right and left direction, and are stacked in a block shape (approximately triangular prism shape) .

Each of the battery cells 3 is a cylindrical shaped secondary battery, and has the positive terminal and the negative terminal at right and left end portions thereof. Here, a lithium ion battery is used as the battery cell 3.

The cell assembly 30 in which the plural battery cell 3 are disposed, are press-fitted into a pair of a battery holder members 12, 13 from right and left sides, and its disposed state is held. The battery holder members 12, 13 are made of resin, and are molded.

The battery holder member 12 comprises the side board portion 120 of a triangular shape which covers the whole right surface of the cell assembly 30, and peripheral covering portions 121 which cover the right half peripheral surface in each of the battery cells 3. And the peripheral covering portions 121 project from the side board portion 120 toward left.

The battery holder member 13 also comprises the side board portion 130 of a triangular shape which covers the whole left surface of the cell assembly 30, and peripheral covering portions 131 which cover the left half peripheral surface in each of the battery cells 3. And the peripheral covering portions 131 project from the side board portion 130 toward right.

The battery holder member 12 and the battery holder member 13 are coupled each other in a state that the tip portions of the peripheral covering portions 121 and the peripheral covering portions 131 are contacted each other, and stably hold each of the battery cells 3 of the cell assembly 3.

The lead plates 101-114 are disposed at the right and left side surfaces of the cell assembly 30, namely, separately on the outer surface of the side board portion 120 and on the outer surface of the side board portion 130. The setting surface 11 on which the circuit unit 20 is set, is a plane (X-Y plane) perpendicular to the outer surface of the side board portion 120 and the outer surface of the side board portion 130, and has a rectangular shape similar to the circuit unit 20. And each side which extends in the front - back direction (X direction) at both right and left sides of the setting surface 11, is adjacent to the top edges of the side board portion 120 and the side board portion 130.

In the setting surface 11, parts of the peripheral surface of the battery cells 3 arranged on the surface of the cell assembly 30, and parts of the peripheral covering portions 121, 131 are exposed, and the circuit unit 20 is stably set on the setting surface 11.

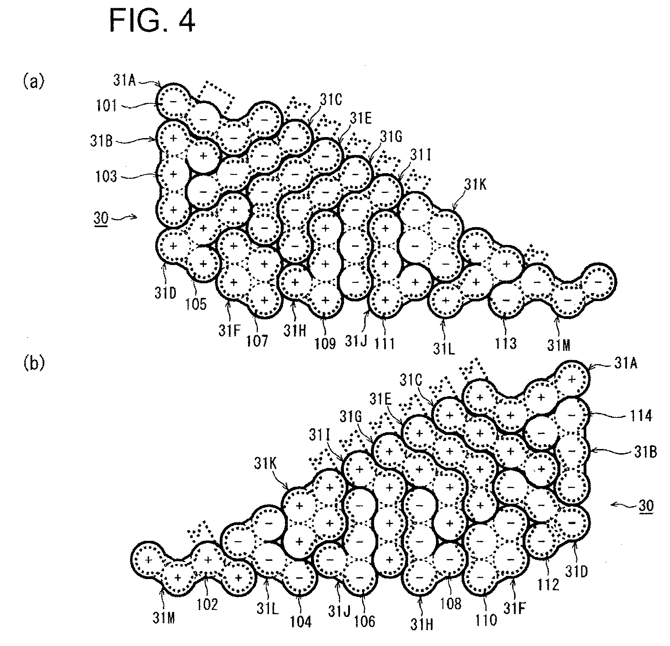

FIG. 4 is a figure which shows and explains connecting state of the battery cells 3 included in the cell assembly 30, and (a) is a view seen from the right side surface, and (b) is a view from the left side surface. In the figure, the cell groups 31A, 31B, 31C ... 31 M are shown in a solid line, and the lead plates 101-114 are shown in a dashed line.

Here, a case that 4 pieces of the battery cells 3 are connected in parallel and constitute the one cell group, is explained.

The plural battery cells 3 included in the cell assembly, are divided into the first group in which the positive terminals face right and the second group in which the negative terminals face right. And the battery cells 3 belonging to the first group are divided into N pieces of the cell groups, and the battery cells 3 belonging to the second group are divided into (N+1) pieces of the cell groups.

As shown in FIG. 4(a), (b), the number of the battery cells which constitute the cell assembly 30 is 52, and the battery cells 3 are divided into 13 pieces of the cell groups31A, 31B, 31C ... 31 M (N=6).

In the N pieces (6 pieces) of the cell groups 31B, 31D, 31F, 31H, 31J, 31L belonging to the first group, the positive terminals of the battery cells 3 face right, the negative terminals face left.

On the other hand, in the N+1 pieces (7 pieces) of the cell groups 31A, 31C, 31E, 31G, 31I, 31K, 31M belonging to the second group, the positive terminals of the battery cells 3 face left, the negative terminals face right.

As shown in FIG. 2, FIG. 4, and FIG. 4(a), among the lead plates 101-114, the lead plates 101, 103, 105, 107, 109, 111, 113 are arranged on the right side surface of the cell assembly 30 (the outer surface of the side board portion 120). And the lead plates 102, 104, 106, 108, 110, 112, 114 are arranged on the left side surface of the cell assembly 30 (the outer surface of the side board portion 130).

And at the right side surface of the cell assembly 30, the negative terminals in the cell group 31A of the minimum electric potential are connected by the lead plate 101. In the remaining 12 pieces of the cell groups 31B-31M, the positive terminals of the 6 pieces of the cell groups 31 B, 31 D, 31 F, 31 H, 31 J, 31 L belonging to the first group, and the negative terminals of the 6 pieces of the cell groups 31C, 31 E, 31G, 31I, 31K, 31M belonging to the second group, are connected through one common piece of the lead plate 103, 105, 107, 109, 111, 113 by each of the cell groups. On the other hand, as shown in FIG. 4(b), at the left side surface of the cell assembly 30, the positive terminals in the cell group 31 M of the maximum electric potential are connected by the lead plate 102. In the remaining 12 pieces of the cell groups 31A-31L, the negative terminals of the 6 pieces of the cell groups 31 B, 31 D, 31 F, 31 H, 31 J, 31 L belonging to the first group, and the negative terminals of the 6 pieces of the cell groups31A, 31C, 31E, 31 G, 31I, 31 K belonging to the second group, are connected through one common piece of the lead plate 102, 104, 106, 108, 110, 112 by each of the cell groups.

The side board portion 120 and the side board portion 130 have window portions at the location where the terminals of the battery cells 3 face, and through each of the window portions, the lead plates 101-114 are weld-fixed to the terminals of the battery cells 3.

In this way, as the lead plates 101-114 are arranged separately at both right and left side surfaces of the cell assembly 30, the cell groups 31A, 31B, 31C ... 31 M in which 4 pieces of the battery cells 3 are connected in parallel in each of the cell groups, are connected in 13 series (4 parallel 13 series).

A tap portion 101 a is provided at the top portion of the lead plate 101 of the minimum electric potential which is located at the right front end of the battery unit 10, and a tap portion 114a is provided at the top portion of the lead plate 114 of the maximum electric potential which is located at the left back end of the battery unit 10.

Charging and discharging of the battery unit 10 is carried out through the tap portion 101 a and the tap portion 114a.

Further, tap portions 102a-113a which output the intermediate electric potential, are provided at the top portions of the lead plates 102-113. The tap portion 101 a and the tap portions 103a, 105a, 107a, 109a, 111a, 113a are arranged at the right side of the setting surface 11, namely along the boundary between the right surface of the cell assembly 30 and the setting surface 11 in the X direction, and the tap portions 102a, 104a, 106a, 108a, 110a, 112a and the tap portion 114a are arranged at the left side of the setting surface 11, namely along the boundary between the left surface of the cell assembly 30 and the setting surface 11 in the X direction.

In the overall arrangement order of these tap portions 101a-114a in the front - back direction, as shown in FIG. 3, the tap portions arranged at the right side and the tap portions arranged at the left side are alternately arranged in the order of the tap portions 101a, 102a, 103a, 104a ... 113a, 114a from the front.

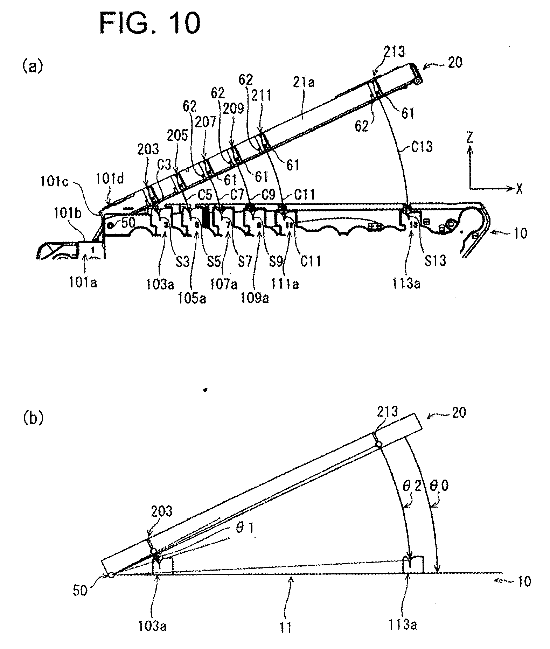

The tap portions 102a-113a project upward beyond the setting surface 11. Here, heights of the tap portions 102a-113a projecting from the setting surface 11, are set in such a way as decreasing from front to back (refer to FIG. 10(a)).

The side board portion 120 of the battery holder member 12 extends upward beyond the setting surface 11 at locations without the tap portions 103a, 105a, 107a, 109a, 111a, 113a, and extended portions 71-76 are formed. The tap portion 105a, 107a, 109a, 111a, 113a are positioned between the adjacent extended portions 71-76.

In the same way, the side board portion 130 of the battery holder member 13 extends upward beyond the setting surface 11 at locations without the tap portions 102a, 104a, 106a, 108a, 110a, 112a, and extended portions 81-87 are formed. The tap portion 104a-112a are positioned between the adjacent extended portions 81-87.

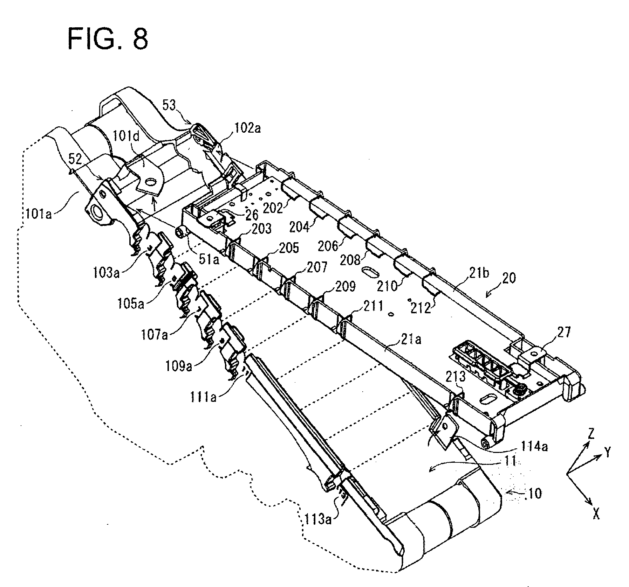

The circuit unit 20 is press-fitted between the extended portions 71-76 arranged at the right side of the setting surface 11 and the extended portions 81-87 at the left side of the setting surface 11, and is set on the setting surface 11 (refer to FIG. 8).

And when the circuit unit 20 is set on the setting surface 11, the tap portions 101a-114a are arranged along both right and left sides.

### 3. Structure of Circuit Unit 20

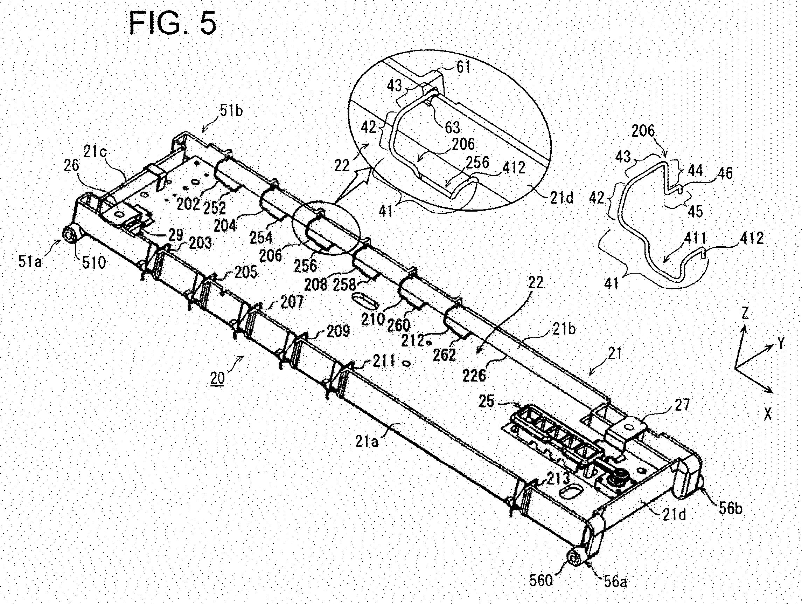

FIG. 5 is a perspective view showing a structure of the circuit unit 20.

The circuit unit 20 has the structure where the protection circuit board 22 is stored in the board holder 21 of a dish shape. The protection circuit board 22 has an elongated rectangular shape in the front - back direction (X direction). The board holder 21 includes a bottom board portion of an elongated rectangular shape on which the protection circuit board 22 is mounted, and a right side wall portion 21a, a left side wall portion 21b, a front side wall portion 21c, and a back side wall portion 21d surrounding the periphery of the protection circuit board 22. The board holder 21 is made of resin and molded.

As shown in FIG. 1 and FIG. 2, in the protection circuit board 22, as a terminal for power, a terminal portion 26 of low electric potential side (negative side) is provided at the right front end portion, and a terminal portion 26 of low electric potential side (negative side) is provided at the right front end portion, and a terminal portion 27 of high electric potential side (positive side) is provided at the left back end portion. A connector 25 for power is provided at the back end portion of the protection circuit board 22.

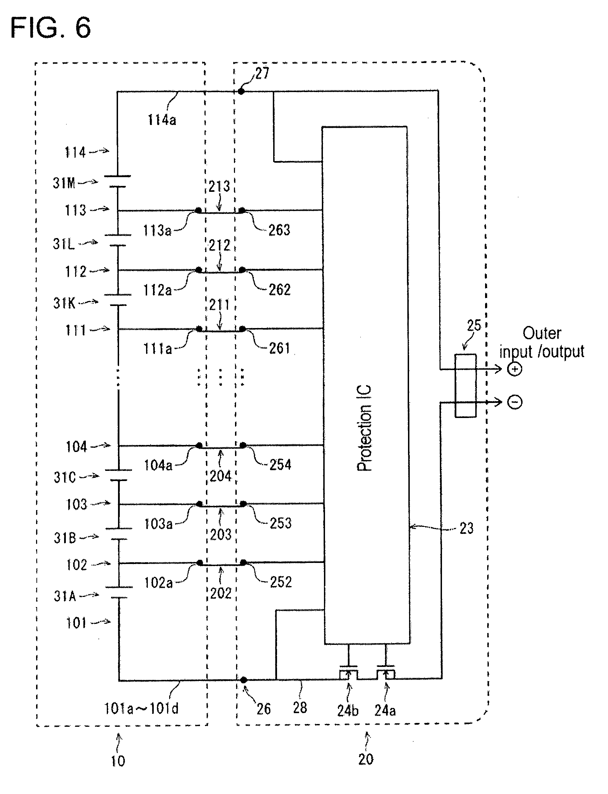

As shown in FIG. 6, in the protection circuit board 22, the terminal portions 26, 27are connected to the connector 25 through a wiring 28 for power. Here, the connector 25 is exposed outward from an opening window of the outer case.

Further, in order to detect the intermediate electric potentials in the battery unit 10 and make a circuit which controls charging and discharging of the battery unit 10, the protection circuit board 22 has various electronic parts which constitute the protection circuit, for example, a protection IC 23, switching elements 24a, 24b, or the like.

In FIG. 1 and 5, the electric parts of the circuit unit 20 are not shown in the figures. But, in FIG. 6, wirings in the battery unit 10 and the circuit unit 20, the protection IC 23, the switching elements 24a, 24b, or the like are shown.

As shown in FIG. 6, the intermediate electric potentials at the lead plates 101-114 of the battery unit 10 are inputted into the protection IC 23.

Therefore, terminal portions 252-263 along the extended sides 22a, 22b in the front - back direction of the protection circuit board 22 are arranged corresponding to the tap portions 102a-113a of the battery unit 10. The intermediate electric potentials of the terminal portions 252-263 as input terminals are inputted into the protection IC 23.

Concretely, along the right side 22a of the protection circuit board 22, the terminal portion 26 for power and the terminal portions for the intermediate electric potential 253, 255, 257, 259, 261, 263 are arranged in order from the front, and along the left side 22b of the protection circuit board 22, the terminal portions for the intermediate electric potential 252, 254 256 258, 260, 262 and the terminal portion 27 for power are arranged in order from the front,

As shown in FIG. 6, the terminal portions for the intermediate electric potential 252-263 are connected lead pins 202-213, and the intermediate electric potentials from the battery unit 10 are inputted into the protection IC 23 through the lead pins 201-212. Further, also the terminal portions 26, 27are connected to the tap portions 101a, 114a, and these electric potentials are inputted.

The protection IC 23 checks the voltages in each of the cell group 31A-31M, based on each of inputted electric potentials at the time of charging and discharging, and controls currents of charging and discharging. For example, when the voltage of any one of the cell groups exceeds the upper limit, the switching element 24a is turned off, and charging current is stopped. Further, when the voltage of any one of the cell groups decreases less than the lower limit, the switching element 24b is turned off, and discharging current is stopped.

Here, as described below, in the protection circuit board 22, holes are opened at each of the terminal portions for the intermediate electric potential 252-263, and one part in each of the lead pin 201-213 is press-fitted into the hole, and is soldered.

A resin is potted in the board holder 21, and the lower portion in each of the lead pin 201-213 can be buried in the resin. As the potting resin, for example, a silicon resin material, an epoxy resin material, a urethane resin material, or the like can be used.

And, for example, the protection circuit board 22 is covered with a potting resin to configure the circuit unit, and the board holder 21 can be omitted in the circuit unit. 4. Connection of Power Line between Battery Unit 10 and Circuit Unit 20

Connection of low electric potential side (negative side) power line:
As shown in a partial enlarged view of FIG. 1, the lead plate 101 is further bent and extended from the tap portion 101a, and a first bent portion 101b, a second bent portion 101c, and a connecting portion 101d are formed.

The first bent portion 101b is bent toward left, and extended along the upper surface of the battery holder member 12. The second bent portion 101c is bent from the first bent portion 101b upward, and extended along the outer surface of a front side wall portion 21 c. The connecting portion 101 d is bent from the second bent portion 101 c backward.

In a state that the circuit unit 20 is set on the setting surface 11, the connecting portion 101 d is extended so as to straddle the front side wall portion 21c, and overlaps the terminal portion 26 of the circuit board 22, and then the connecting portion 101d contacts the terminal portion 26. By this, the lead plate 101 and the terminal portion 26 are electrically connected.

In order to maintain the connection between the connecting portion 101d and the terminal portion 26, the connecting portion 101d has a cutout 101e at the back end portion thereof, and at the front end portion of the board holder 21, an engaging pin 29 which is engaged with the cutout 101e projects upward adjacently to the terminal portion 26.

The engaging pin 29 has a T-shape, when the engaging pin 29 is inserted into the cutout 101e, as the connecting portion 101d is pressed on the terminal portion 26 by the engaging pin 29, the connection between the connecting portion 101d and the terminal portion 26 is stably maintained.

Connection of high electric potential side (positive side) power line:
As shown in FIG. 1, the tap portion 114a of the maximum electric potential in the battery unit 10 is extended upward, and its tip portion is bent inward, and then the tap portion 114a is extended on the back end portion of the protection circuit board 22.

On the other hand, at the back end portion of the protection circuit board 22, the terminal portion 27 is provided at a location corresponding to the tip portion of the tap portion 114a. This terminal portion 27 is connected to the connector 25 on the protection circuit board 22, and is connected also to the protection IC 23.

And, the tap portion (power terminal portion) 114a overlaps and contacts the terminal portion, and the lead plate 114 and the terminal portion 27 are electrically connected.

### 5. Detail of Lead Pin 202-213

The lead pins 202-213 which connect the tap portions 102a-113a of the battery unit 10 and the terminal portions of the circuit unit 20, are explained.

As shown in FIG. 1 and 5, the lead pins 202-213 are extended from each of the terminal portions 252-263 provided in the protection circuit board 22 outside the board holder 21, and are extended toward each of the corresponding tap portions 102a-113a.

The lead pins 203, 205, 207, 209, 211, 213 are disposed so as to straddle the right side wall portion 21a, and the lead pins 202, 204, 206, 208, 212 are disposed so as to straddle the left side wall portion 21b.

Each of the lead pins 202-213 is made of a resilient metal wire, and the metal wire is bent.

Shapes and fixings of the lead pins 202-213 are explained. Here, as one example, on behalf of them, the lead pin 206 is explained.

In partial enlarged perspective views of FIG. 5, the lead pin 206 set to the protection circuit board 22, and the lead pin 206 by itself are shown.

The lead pin 206 comprises a fixing connection portion 41 which is fixed on the surface of the protection circuit board 22, an upward extending portion 42 which is bent from the fixing connection portion 41 and extends upward (Z direction) along the inner surface of the left side wall portion 21 b, an outward extending portion 43 which is bent from the top portion of the upward extending portion 42 and extends outward (Y direction) beyond the left side wall portion 21 b, a downward extending portion 44 which is bent from the outward extending portion 43 and extends downward, and a contacting portion 45 which is bent from the low end portion of the downward extending portion 44 to outward (Y direction) and contacts the lead plate 106.

The contacting portion 45 is press-fitted into, and is electrically connected to a notch portion which is formed at the tap portion 106a of the lead plate 106. The tip portion 46 of the contacting portion 45 is bent downward. In the fixing connection portion 41, a curved portion 411 is formed so as to project downward.

The curved portion 411 is press-fitted into a hole at the terminal portion 256 provided in the protection circuit board 22, and is connected to the terminal portion 256, and the fixing connection portion 41 is fixed at a predetermined position. The curved portion 411 and the terminal portion 256 are electrically connected and coupled by solder.

A tip portion 412 of the fixing connection portion 41 is inserted into between the protection circuit board 22 and the left side wall portion 21b. By this, fixing of the fixing connection portion 41 to the protection circuit board 22 is strengthened.

The outward extending portion 43 is press-fitted into a cutout which is provided at the upper edge of the left side wall portion 21 b across the left side wall portion 21 b. By this the cutout 63, the outward extending portion 43 of the lead pin 206 is positioned in the front - back direction when the outward extending portion 43 is set to the board holder 21.

Here, near the cutout 63, a first rib portion 61 projects at the outer surface of the left side wall portion 21 b. As described below in detail, this first rib portion 61 guides or fixes the location of the downward extending portion 44 of the lead pin 206.

By such lead pins 201-213, the tap portion 102a-113a of the battery unit 10 and the terminal portion 252-263 of the circuit unit 20 are connected.

### 6. Pivotable Structure of Circuit Unit 20 and Battery Unit 10

In the core pack 1, at the time of assembling,
The front end side portion of the circuit unit 20 and the front end side portion of the battery unit 10 are pivotally coupled by an axis 50 (refer to FIG. 1) along the lateral direction, such that each of the lead pins 202-213 is connected to the corresponding tap portions 102a-113a in order while setting the circuit unit 20 on the setting surface 11 by pivoting or rotating the circuit unit 20.

Concretely, as shown in FIG. 2, at the lower side of the front end portion in the board holder 21, a pivot portion 51 a which projects toward right, and a pivot portion 51 b which project toward left, are provided. On the other, at the front end portions of the side board portions 120, 130 in the battery holder member2 12, 13, bearing portions 52, 53 are provided such that the pivot portions 51 a, 51 b is pivotally coupled thereto.

The pivot portions 51 a, 51 b can be made of the same resin as the board holder 21, or made of metal or the like as a separate part. In the same way, the bearing portions 52, 53 can be made of resin, or made of metal or the like as a separate part.

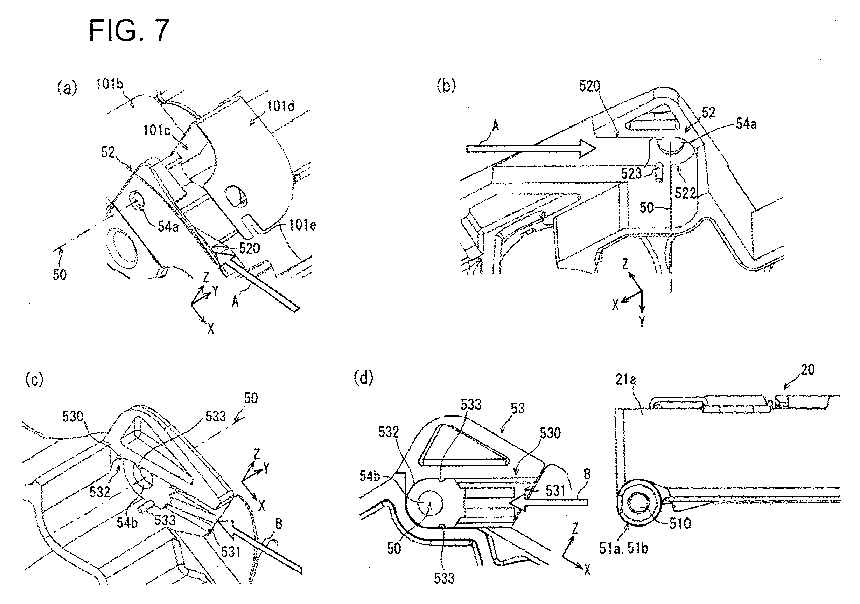

FIG. 7(a), (b) are enlarged views of the bearing portion 52 provided at the front end portion of the side board portion 120 in the battery holder member 12.

FIG. 7(a) is the partial enlarged view of the bearing portion 52 from the same direction as FIG. 3, and FIG. 7(b) is the partial view of the bearing portion 52 from the inner surface side.

As shown in FIG. 7(b), in the inner surface side in the bearing portion 52, a bearing groove 520 which the pivot portion 51a is inserted into, is formed.

FIG. 7(c), (d) are enlarged views of the bearing portion 53 from the inner surface side provided at the front end portion of the side board portion 130 in the battery holder member 13.

A bearing groove 530 which the pivot 51 b is press-fitted into, is provided in the inner surface side of the bearing portion 53.

As shown in FIG. 7(d), the bearing groove 530 has an inner peripheral surface of a U-shape from the axle direction (Y direction).

The bottom portion 532 of the bearing groove 530 is in an arc shape, and an opening portion 531 having an inner peripheral surface of a U-shape is provided at the diagonally upper rear of the bearing groove 530. The pivot portion 51b of the circuit unit 20 is inserted from this opening portion 531 in the direction indicated in the arrow B defined by outline in FIG. 7(c), (d), and the pivot portion 51 b is inserted until the bottom portion 532 of the bearing groove 530.

Here, projection portions 533 which prevent the pivot portion 51 b inserted from the come-off from the bottom portion 532 on the inner peripheral surface of the bearing groove 530, are provided.

The bearing groove 520 is also the same structure as the bearing groove 530, and as shown in FIG. 7(b), the bearing groove 520 has an inner peripheral surface of a U-shape from the axle direction (Y direction), and the bottom portion 522 of the bearing groove 530 is in an arc shape.

An opening portion 521 having an inner peripheral surface of a U-shape is provided at the rear of the bearing groove 520. The pivot portion 51 a of the circuit unit 20 is inserted from this opening portion 531 in the direction indicated in the arrow A defined by outline in FIG. 7(a), (b), and the pivot portion 51a is inserted until the bottom portion 522 of the bearing groove 520.

In addition, projection portions 523 which prevent the pivot portion 51 a inserted from the come-off from the bottom portion 522 on the inner peripheral surface of the bearing groove 520, are provided.

FIG. 8 is a perspective view showing a state that the circuit unit 20 is pivotally coupled to the battery unit 10.

As shown in this figure, the connecting portion 101d of the battery unit 10 is lifted as indicated by the arrow, and the front end portion of the circuit unit 20 is inserted under the connecting portion 101d, and the pivot portions 51a, 51b are inserted into the pivot grooves 520, 530 from the diagonally upper rear of the bearing portions 52, 53.

When the pivot portions 51 a, 51b are inserted until the bottom portions 522, 532 of the bearing groove 520, 530, the pivot portions 51a, 51b can be smoothly rotated at the bottom portions 522, 532 of the bearing portions 52, 53.

Namely, the front end portion of the circuit unit 20 is pivotally coupled to the front end portion of the battery unit 10, and the circuit unit 20 can be rotated at the center of the axis 50.

As the core pack 1 has such a pivotable structure, as described below, at the time of manufacturing the core pack 1, while the circuit unit 20 is set on the setting surface 11 of the battery unit 10 by rotating the circuit unit 20, the lead pins 202-213 can be connected to the tap portions 101a-103a in this order..

### 7. Method for Manufacturing the Core Pack 1

At the time of manufacturing the core pack 1, a method for manufacturing comprises a step of manufacturing the battery unit 10, a step of manufacturing the circuit unit 20 with lead pins, a step of setting the circuit unit 20 to the battery unit 10 and connecting the lead pins.

In the step of manufacturing the battery unit 10, while the plural battery cells 3 are inserted into the battery holder member 12, 13, the cell assembly 30 is assembled. And the lead plate 101-114 are set to the battery holder members 12, 13, and by welding them to the terminal in each of the battery cells 3, the battery unit 20 is manufactured.

In the step of manufacturing the circuit unit 20 with the lead pins, the protection circuit board 22 is stored in the board holder 21. Further, the lead pins 201-213 are press-fitted into and connected by soldering to the corresponding holes of the protection circuit board 22. In addition, a resin can be potted in the board holder 21.

In the step of setting the circuit unit 20 to the battery unit 10, the circuit unit 20 with the lead pin 201-213 is pivotally coupled to the battery unit 10, and is set by rotating toward the setting surface 11. Accordingly, the lead pins 201-213 are connected to the tap portions 102a-113a.

This step of setting is explained in detail below.

### 8. Step of Setting the Circuit Unit 20

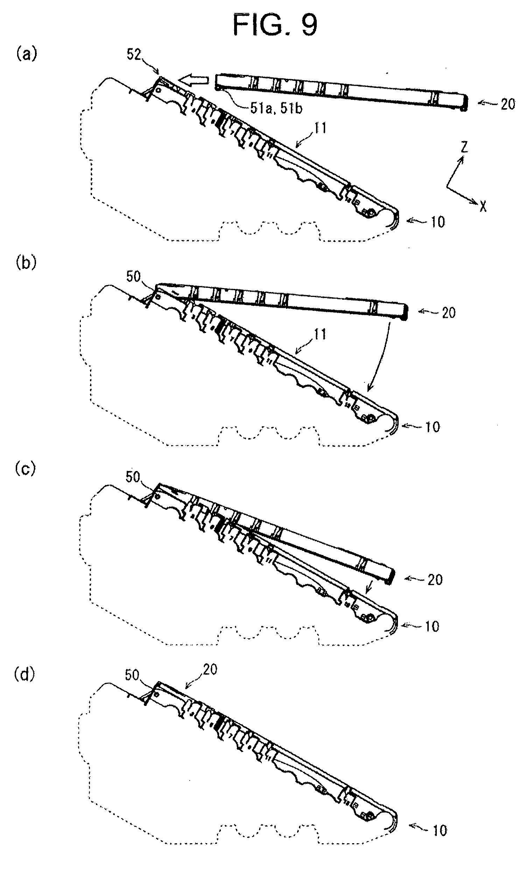

FIG. 9(a)-(d) are views showing the step of setting the circuit unit 20 to the battery unit 10.

As shown in FIG. 9(a), the pivot portions 51a, 51 b provided at the front end of the circuit unit 20 are press-fitted in the bearing portions 52, 53, and then pivotally coupled. At this time, the connecting portion 101d and the terminal portion 26 are contacted, and the tap portion 101 a and the terminal portion 26 are connected, and then the connection of the lower electrical potential side (negative side) in power line is made.

Next, as shown in FIG. 9(b)-(d), the circuit unit 20 is set by rotating the circuit unit 20 toward the setting surface 11. Here, setting of the circuit unit 2 on the setting surface 11 is carried out in a state that the tip portion of the tap portion 114a is raised as shown in the arrow of the FIG. 8.

In the circuit unit 20, as the lead pins 202-213 are arranged in order from the front to the rear, the distances from the axis 50 to the lead pins 202-213 become bigger in this order.

Therefore, according to setting the circuit unit 20, the lead pins 202-213 are press-fitted into the taps with the contacting portions 45 contacting the tap portion 102a-113a.

In FIG. 10(a), (b), according to setting the circuit unit 20, the lead pins are connected to the tap portions in order from the closest one to the axis 50.

As shown in FIG. 10(a), the lead pin 203, 205, 207, 209, 213 arranged along the right side wall portion 21 a of the circuit unit 20, are press-fitted into and connected to the taps of the tap portions 103a, 105a, 107a, 109a, 111 a, 113a along a path C3, C5, C7, C9, C11, C13 of an arc shape according to the rotation of the circuit unit 20. In the same way as this, the lead pin 202, 204, 206, 208, 210, 212 arranged along the right side wall portion 21 b of the circuit unit 20, are press-fitted into and connected to the taps of the tap portions 102a, 104a, 106a, 108a, 110a, 112a along a path of an arc shape.

When in this way the lead pins 202-213 are connected to the taps 102a-113a by rotating the circuit unit 20, the rotated angle of the lead pins 202-213 is common, but in the order in which the lead pins 202-213 contact the tap portions 102a-113a, first the lead pin 202 closest to the axis 50 contacts the tap portion 102a, and the lead pins 203, 204 ... contact the tap portions 103a, 104a, 105a ... in order, and at last the lead pin 213 contacts the tap portion 113a.

In the other wards, when the circuit unit 20 is rotated at the center of the axis 50, the rotated angle at which the lead pin close to the axis 50 contacts the tap portion is small, and on the other hand, the rotated angle at which the lead pin distant from the axis 50 contacts the corresponding tap portion is big.

This point is explained referring to FIG. 10(b). This figure compares the rotated angle in the lead pin 203 close to the axis 50, and the lead pin 213 distant from the axis 50.

In a state shown in FIG. 10(b), the angle of the circuit unit 20 to the setting surface 11 is theta (θ) 0. Therefore, when the circuit unit 20 is rotated by the angle θ0 from this state, the circuit unit 20 is set on the setting surface 11. According to this, the lead pin 203 and the lead pin 213 are also rotated by the common angle θ0, and the connection of the tap portion 103a and the tap portion 113a are completed.

On the other hand, the rotated angle θ1 in which the lead pin 203 closest to the axis 50 start contacting the tap portion 103a, the rotated angle θ2 in which the lead pin 213 most distant to the axis 50 start contacting the tap portion 113a, any one of the rotated angle θ1 and the rotated angle θ2 is smaller than the rotated angle θ0, but the rotated angle θ2 is bigger than the rotated angle θ1 (θ1 < θ2 < θ0).

In this way, in the core pack 1, the lead pins contact the tap portion 102a-113a in the order from the pin close to the axis 50 to the pin distant from the axis 50.

Here, in order that thus the lead pins 202-213 contact the tap portions 102a-113a in the order, the followings are contributed. In the battery unit 10 the tap portions 102a-113a project from the setting surface 11 upward as described above, and heights of projecting from the setting surface 11 among the tap portions 102a-113a are set lower as the tap portions become distant from the axis 50.

As described above, after the lead pins 201-213 contact the tap portions 102a-113a in the order, the tip portion of the tap portions 114a is bent on the terminal portion 27, and then the lead plate 114 as the terminal for power of the high electrical side and the terminal portion 27 are electrically connected.

### 9. Fixing the Circuit Unit 20 to the Battery Unit 10

The circuit unit 20 is fixed to the battery unit 10 by screw at the front end portion and the back end portion thereof, in a state that the circuit unit 20 is set on the setting surface 11.

Concretely, at the front end portion, a through hole 54a is opened at the location of the axis 50 in the bearing portion 52, and a through hole 54b is opened at the location of the axis 50 in the bearing portion 53. Further, screws (not shown in the figures) are screwed into screw holes 510 (refer to FIG. 5) of the pivot portions 51a, 51b through these through holes 54a, 54b, and thus the pivot portions 51a, 51b are fixed to the bearing portions 52, 53.

In addition, at the back end portion, pivot portions 56a, 56b are provided at the back end portion of the board holder 21, and on the other hand, in the side board portion 120 of the battery holder member 12 and the side board portion 130 of the battery holder member 13, through holes 57a, 57b are opened at the locations corresponding to the pivot portions 56a, 56b in the state that the circuit unit 20 is set on the setting surface 11. Further, screws (not shown in the figures) are screwed into screw holes 560 (refer to FIG. 5) of the pivot portions 56a, 56b through these through holes 57a, 57b, and thus the pivot portions 56a, 56b are fixed to the side board portions 120, 130.

### 10. Rib Portion Guiding Tap Portions of Lead Pins at Connecting Location

As described above, the curved portion in each of the lead pins 202-213 is press-fitted into the hole of the terminal portions 252-263, and is fixed at the predetermined portion of the protection circuit board 22. and the outward extending portion 43 in each of the lead pins 202-213 is press-fitted into the cutout 63, and is fixed at the predetermined portion of the board holder 21. However, the downward extending portion 44 and the contacting portion 45 in each of the lead pins 202-213 are not fixed to the board holder 21. Also, as the outward extending portion 43, the downward extending portion 44, and the contacting portion 45 are resilient, those are resiliently deformed by adding external force. Therefore, the contacting portion 45 is able to move to some extent in the front-back direction by adding external force.

Here, as shown in FIG. 10(a) or the like, at the outer surfaces of the side wall portions 21a, 21b in the board holder 21, a pair of the first rib 61 and a second rib 62 are provided so as to surround the downward extending portion 44 in each of the lead pins 202-213, and then the downward extending portion 44 and the contacting portion 45 are limited in the movable extent.

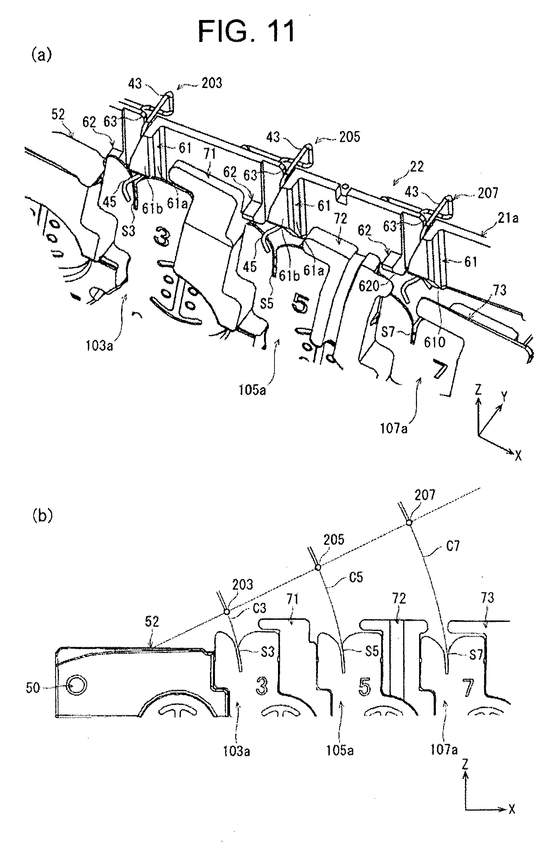

Namely, in FIG. 11 (a), the first rib 61 and the second rib 62 against each of the lead pins 203, 205, 207, are provided at the outer surface of the right side wall portion 21a.

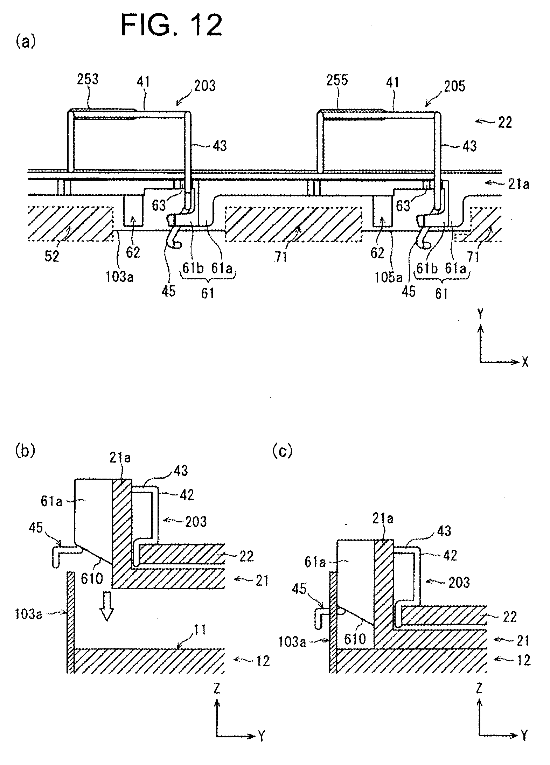

Also, FIG. 12(a) is an enlarged plan view in case that the vicinity of the lead pins 203, 205 in the circuit unit 20 is seen from above. FIGs. 12(b), (c) are sectional views in case that the vicinity of the lead pin 203 is seen from back.

As shown in these figures, the first ribs 61 are provided at the location adjacent to the cutouts 63. The first rib 61 comprises an outward projecting portion 61 a which projects from the outer surface of the right side wall portion 21a to outward (the right direction, the opposite direction to Y direction, and the bent portion 61 b which is bent from the outward projecting portion 61a to front (the opposite direction to the X direction). In case that it is seen from above, the first rib 61 has an L-shape.

The outward projecting portion 61 a extends along the outward extending portion 43 of the lead pin 203, the bent portion 61 b covers the outer side of the downward extending portion 44.

Thus, as the downward extending portion 44 in each of the lead pins 202-213 is surrounded the first rib 61 and the second rib 62, even though the downward extending portion 44 is resiliently deformed, the downward extending portion 44 stays within the extent surrounded by the first rib 61 and the second rib 62, and the contacting portion 45 is limited in the extent in which the contacting portion 45 can move in the front-back direction.

Also, when the circuit unit 20 having the lead pins 202-213 is set on the setting surface 11, the contacting portion 45 in each of the lead pins crosses the tap portions 102a-113a, and is press-fitted into the notch portion in each of the tap portion 102a-113a, and is guided at the location in the right and left direction as described below.

As shown in FIG. 11 (a), FIG. 12, the first rib 61 and the second rib 62 which surround the downward extending portion 44 of the lead pin 203, are press-fitted between the bearing portion 52 and the extended portion 71 inside the tap portion 103a, and the contacting portion 45 of the lead pin 203 contacts the tap portion 103a. In the same way, the first rib 61 and the second rib 62 which surround the downward extending portion 44 of the lead pin 205, are press-fitted between the extended portion 71 and the extended portion 72 inside the tap portion 103a, and the contacting portion 45 of the lead pin 205 contacts the tap portion 105a.

In the same way, also the first rib 61 and the second rib 62 which surround the downward extending portion 44 in each of the other lead pins 202, 204, 206-213, are press-fitted between the adjacent extended portions inside the tap portions 102a, 104a, 106a-113a, and then the contacting portions 45 of the lead pins 202, 204, 206-213 contact the tap portion 102a, 104a, 106a-113a.

Further, the lower end surfaces of the first rib 61 and the second rib 62 are inclined.

In FIG. 11(a), FIG. 12(b), FIG. 12(c), the first rib 61 and the second rib 62 corresponding to the lead pin 203 are shown. As shown in those figures, the lower end surface 610 of the first rib 61 is not perpendicular to the right side wall portion 21a, and is inclined in the right and left direction. In the same way, also the lower end surface 620 of the rib 62 is inclined in the right and left direction

By this, in the step of setting the circuit unit 20 to the battery unit 10, as the first rib 61 and the second rib 62 is smoothly inserted inside the tap portion 102a-113a, the contacting portions 45 of the corresponding lead pins are surely press-fitted into, and properly contact the notch portions of the tap portions.

Concretely, for example, in a state that the pivot portions 51 a, 51 b are inserted into the bearing grooves 520, 530, and are pivotally coupled, there are plays between both to some extent. Therefore, when the direction of the axis 50 is slipped a little and the state shown in FIG. 12(b) is changed to the state shown in FIG. 12(c), it happens that the upper end portion of the tap portion 103a contacts the lower end surface 610 of the first rib 61 and the lower end surface 620 of the second.

However, even though the upper end portion of the tap portion 103a contacts the lower end surfaces 610, 620, the first rib 61 and the second rib 62 is smoothly inserted inside the tap portion 103a (into the left side of the tap portion 103a), with the inclined lower end surfaces 610, 620 sliding on the upper end portion of the tap portions.

Also, as shown in FIG. 11 (a), FIGs. 12(a) to (c), since the contacting portion 45 of the lead pin 203 projects in the right direction (the opposite direction to Y direction) through under the bent portion 61 b in the first rib 61, the contacting portion 45 of the lead pin 203 is surely press-fitted into the notch portion of the tap portion 103a, and is positioned in the right and left direction.

As mentioned above, the contacting portion 45 in each of the lead pins 202-213 is surely press-fitted into, and is connected to the notch portion of the corresponding tap portions 102a-113a by the function of the first rib 61 and the second rib 62

### 11. Structure of Guiding Lead Pin into Notch Portion of Tap Portion

The notch portions formed at the tap portions 102a-113a are formed in such a way as inclining in the direction that the notch portions are narrowed as going from the setting surface 11 side to the battery cells 3 side. Namely, a shape in each of the notch portions is formed such that the width is gradually becoming narrower as going from its inlet to the inner portion along the path of the arc shape drawn by the corresponding lead pins 202-213.

By this, according to the rotation of the circuit unit 20, the contacting portion 45 in each of the lead pins 202-213, contacts the corresponding tap portions 102a-113a, and after that, is guided into the notch, and then is smoothly inserted into the inner portion of the notch portion.

FIG. 11 (a) is a perspective view showing a state that the lead pins 203, 205, 207 contact the tap portions, (b) is its explanation drawing. The lead pins 203, 205, 207 are explained below, referring to those figures.

As shown in FIG. 11 (b), according to rotating the circuit unit 20 at the center of the axis 50, the contacting portions 45 of the lead pin 203, 205, 207 are connected to the tap portions 103a, 105a, 107a along the path C3, C5, C7 of the arc shape.

In each of the tap portions 103a, 105a, 107a, the notch portion (slit) S3, S5, S7 into which the corresponding lead pin 203, 205, 207 is press-fitted, is formed, and the notch portion S3, S5, S7 is formed along the above path C3, C5, C7.

In addition, the notch portions S3, S5, S7 are formed such that the width is gradually becoming narrower as going from its inlet to the inner portion with the width of the inlet wide.

Here, as mentioned above, as the contacting portion 45 in each of the lead pins is enable to move to some extent in the front-back direction by adding external force, even though the paths in which the contacting portions 45 of the lead pins 203, 205, 207 are inserted into the notch portions S3, S5, S7, are slipped a little in the front-back direction, while the contacting portions 45 of the lead pins 203, 205, 207slide on the edges of the notch portions S3, S5, S7, those can be smoothly inserted into the inner portions from the inlets of the notch portions.

### 12. Main Effect of Core Pack 1 and its Method of Manufacturing

Generally, when the battery pack in which the protection unit carries out protection operation inputting the intermediate electric potentials is assembled, the tap portions of the battery unit and each of the input terminals are connected. At this time, when the tap portion of which the electrical potential is largely different from the other tap portion already connected, is connected, the series-connected voltage of the cell assembly between them is applied to the IC of the circuit unit, and it happens that higher voltage more than the rated voltage is applied to the protection IC, and it happens that the protection IC is broken. And there is a possibility that the trouble of the IC has a bad influence on the other elements mounted on the circuit board.

On the contrary, in the above core pack 1, as the circuit unit 20 is pivotally coupled to the battery unit 10 at the time of assembling, the tap portion 101 a and the terminal portion 26 of the minimum electrical potential are connected, and next while the circuit unit 20 is rotated, and is set on the setting surface 11, the tap portions 102a-103a of the battery unit 10 are automatically connected to the terminal portions 252-263 in the ascending order from low electrical potential side.

Therefore, without the protection IC 23 broken, without troublesome of connecting the lead wires by manual procedures, connection of the circuit unit for input of the intermediate electrical potential is done, and it contributes to the decrease of the manufacturing cost

In addition, in the core pack 1, when the connections are separated from the state that the circuit unit 20 is set to the battery unit 10 and the lead pins 202-213 are connected to the tap portions 102a-113a, while the circuit unit 20 is separated from the setting surface 11 by rotating the circuit unit 20 at the center of the axis 50, the lead pins 202-213 are automatically separated from the tap portions 102a-113a in the order from high electrical potential. Accordingly, by the same reason as assembling, it prevents higher voltage more than the rated voltage from being applied to the protection IC.

Therefore, at maintenance or the like, the circuit unit 20 of the core pack 1 can be easily disconnected from the battery unit 10.

### [Modification Example, etc.]

In the above, the explanation is described based on the embodiment, and the following modification examples are enable to carry out.
1. In the battery pack of the above embodiment, the three - dimensional shape of the cell assembly is triangular prism shape, but its shape in not limited to a specific shape, for example, a cubic shape can be used.
2. In the above embodiment, the lithium ion battery is used as the battery cell, and all rechargeable batteries can be applied to the battery cell. For example, a lithium polymer battery or a nickel-hydrogen battery can be used to carry out an embodiment in the same way.
3. In the battery pack of the above embodiment, each of the cell groups in the battery unit configures 4 parallel-connected battery cells, but the number which constitutes each of the cell group is not limited to a specific number, for example, 1 piece of the batter cell can be used. In addition, it is acceptable that a plurality of the battery cells in each of the cell groups are connected in series.
   Further, in the battery pack of the above embodiment, the number of the series-connected cell groups is 13, but it is acceptable that this series-connected number is equal to or more than 3.
   Moreover, in the battery pack of the above embodiment, the number of the series-connected cell groups is an uneven number, and the tap portion of the maximum electrical potential and the tap portion of the minimum electrical potential are disposed at the left side surface and the right side surface. But it is acceptable that the series-connected number is an even number, and in this case, the tap portion of the maximum electrical potential and the tap portion of the minimum electrical potential are disposed at the same side surface.
4. In the battery pack of the above embodiment, when the circuit unit 20 is pivotally coupled to the battery unit 10, the connecting portion 101d and the terminal portion 26 contact each other, and then the lead plate 101 and the terminal portion 26 is electrically connected. But before the circuit unit 20 is pivotally coupled to the battery unit 10, it is acceptable that the lead plate 101 and the terminal portion 26 are connected each other by a lead wire or the like.
5. In the battery pack of the above embodiment, the pivot portions 51 a, 51 b are provided at the circuit holder 21, and the bearing portions 52, 53 are provided at the battery holder member 12, 13, and then the pivotable structure is carried out. But the pivotable structure is not limited to this, and conversely the pivot portions are provided at the battery holder member, and the bearing portions are provided at the circuit holder, and then the circuit unit is pivotally coupled to the battery unit, and the same movement can be carried out.
   Further, holes are opened at the front end portions of the circuit holder and the battery holder, and a shaft member is inserted into the holes, and then the circuit unit can be pivotally coupled to the battery unit.
6. In the battery pack of the above embodiment, the battery cell has the positive terminal at one end side and the negative terminal at the other end side as the battery cells which constitute the battery unit. Further, the battery cell which has the positive terminal and the negative terminal at the one end side, can be used.

Also in this case, the positive terminals and the negative terminals are exposed at the one edge surface, and the plural lead plates are disposed at its edge surface, and the plural tap portions are arranged in the order of the electrical potentials at the one side of the setting surface in the battery unit. The plural lead pins are provided at the one side of the circuit unit, and each the tap portions can be connected according to rotating the circuit unit.

### INDUSTRIAL APPLICABILITY

The battery pack of the present invention is used for a power source of an electric bicycle, an electric vehicle, a working robot, or the like.

## Claims

1. A battery pack comprising:
a battery unit (10) having a cell assembly (30) having plural battery cells, and plural lead plates (101-114) being connected to positive terminals and negative terminals of the plural battery cells of the cell assembly (30), in which the battery cells in each of cell groups (31) are connected in parallel through the plural lead plates (101-114) and the cell groups (31) are connected in series; and
a protection circuit board (22) being mounted on one surface (11) of the cell assembly (30),
wherein each of the lead plates (101-114) extend toward the one surface as each of tap portions, and each of the tap portions (102a-113a) is disposed such that electric potentials of the tap portions are arranged in increasing order or decreasing order in one direction, and the protection circuit board (22) has plural input terminals arranged in the one direction corresponding to the tap portions (102a-113a), and a pivotable structure is provided at an end portion side in the one direction on a surface side where the protection circuit board (22) is disposed, and each of the input terminals are connected to each of the tap portions (102a-113a) corresponding thereto, and
wherein in the pivotable structure, before each of the input terminals are connected to each of the tap portions (102a-113a) corresponding thereto, the protection circuit board (22) and the battery unit (10) are pivotably coupled at an end portion in the one direction as an axis in spaced relationship with each other; and then the protection circuit board (22) is set by rotating the protection circuit board (22) pivotally coupled.

2. The battery pack according to claim 1,
wherein in the pivotable structure, the battery unit (10) and the protection circuit board (22) are pivotally coupled by an axis perpendicular to the one direction along the one surface.

3. The battery pack according to claim 1 or 2,
wherein the plural input terminals have lead pins (202-213), and the input terminals are electrically connected to the tap portions (102a-113a) corresponding thereto through the lead pins (202-213).

4. The battery pack according to claim 3,
wherein the tap portions (102a-113a) corresponding to the lead pins (202-213) have notch portions in which the lead pins (202-213) are inserted respectively.

5. The battery pack according to claim 4,
wherein the notch portions provided at the tap portions (102a-113a) are formed in such a way as inclining in the direction that the notch portions are narrowed as going from the one surface side to the battery cells side.

6. The battery pack according to any one of claims 1 to 5,
wherein the battery unit (10) has a battery holder (21) which holds the cell assembly (30), and the protection circuit board (22) is set to a board holder to hold the protection circuit board (22), and a pivot portion is provided at the board holder and a bearing portion is provided at the battery holder (21) such that the pivot portion is pivotally coupled thereto.

7. The battery pack according to claim 6,
wherein the board holder has rib portions which guide the lead pins (202-213) into locations for contacting the tap portions (102a-113a) corresponding to the lead pins (202-213) respectively.

8. The battery pack according to any one of claims 1 to 7,
wherein the cell assembly (30) is constituted in a state that the positive terminals and the negative terminals of the plural battery cells are horizontally disposed, and the plural lead plates (101-114) are disposed at side surfaces where the positive terminals and the negative terminals are exposed, and the cell groups (31) where the same number of the battery cells are connected in parallel are connected in series through the plural lead plates (101-114), and the one surface of the cell assembly (30) is adjacent to the side surfaces, and the protection circuit board (22) carries out protection of a battery circuit by inputting the electrical potential in each of the lead plates (101-114).

9. The battery pack according to claim 8,
wherein the plural battery cells which constitute the cell assembly (30), comprises a first group in which the positive terminals are exposed at a first side surface of the side surfaces, and a second group in which the negative terminals are exposed at the first side surface, and the plural lead plates (101-114) are disposed at the first side surface of the cell assembly (30) and a second side surface facing the first side surface, and the one surface is adjacent to both side surfaces between the first side surface and the second side surface.

10. The battery pack according to claim 9,
wherein in the battery cells belonging to the first group, each of the cell groups (31) has an equal number of the battery cells, and the first group has N (N is an integer of 1 or more) pieces of the cell groups, and in the battery cells belonging to the second group, each of the cell group has the equal number of the battery cells, and the second group has N+1 pieces of the cell groups,
wherein in the first side surface, the negative terminals of the cell group having a minimum electric potential of the second group, are connected to one piece of the lead plate, and the positive terminals in N pieces of the cell groups belonging to the first group and the negative terminals in N pieces of the cell groups belonging to the second group are connected through one common piece of the lead plate by each of the cell groups,
wherein in the second side surface facing the first side surface, the positive terminals of the cell group having the maximum electric potential, are connected to one piece of the lead plate, and the positive terminals in N pieces of the cell groups belonging to the first group and the negative terminals in N pieces of the cell groups belonging to the second group are connected through one common piece of the lead plate by each of the cell groups.

11. A method for manufacturing a battery pack comprising:
a step of manufacturing a battery unit (10) which comprises a cell assembly (30) having plural battery cells, and plural lead plates (101-114) being connected to positive terminals and negative terminal of the plural battery cells of the cell assembly (30), and in which the battery cells in cell groups (31) are connected in parallel through the plural lead plates (101-114) and the cell groups (31) are connected in series;
a step of manufacturing a protection circuit board (22) being mounted on one surface of the cell assembly (30); and
a step of setting the protection circuit board (22) on the one surface of the cell assembly (30),
wherein in the battery unit (10) manufactured in the step of manufacturing the battery unit (10), each of the lead plates (101-114) extend toward the one surface as each of tap portions, and each of the tap portions (101a-113a) is disposed such that electric potentials of the tap portions (101a-113a) are arranged in increasing order or decreasing order in one direction,
wherein the protection circuit board (22) manufactured in the step of manufacturing the protection circuit board (22), has plural input terminals arranged in the one direction corresponding to each of the tap portions (101 a-113a),
the step of setting the protection circuit board (22) further comprising:
a sub-step of pivotally coupling in which the protection circuit board (22) and the battery unit (10) are pivotally coupled at an end portion in the one direction as an axis in spaced relationship with each other; and
a sub-step of rotating in which the protection circuit board (22) is set by rotating the protection circuit board (22) pivotally coupled,
wherein in the sub-step of pivotally coupling, the input terminal closest to the axis is connected to the corresponding tap portion, and in the sub-step of rotating, the other input terminals are connected to the corresponding tap portions (102a-113a) in the order of the electric potentials.

12. The method for manufacturing the battery pack according to claim 11,
wherein in the step of manufacturing the protection circuit board (22), connecting members are provided at, and are extended from each of the input terminals except for the input terminal closest to the axis, and in the sub-step of rotating, the connecting member connected to each of the input terminals is connected to each of the corresponding tap portions in the order of the electric potentials.

13. The method for manufacturing the battery pack according to claim 12,
wherein in the step of manufacturing the protection circuit board (22), the connecting members connected to the input terminals include lead pins (202-213), and the tap portions (102a-113a) of the lead plates (102-113) used in the step of manufacturing the battery unit (10) have notches corresponding to the lead pins (202-213), and in the sub-step of rotating, according to rotating the protection circuit board (22), electrical connections are carried out by press-fitting the corresponding lead pins (202-213) into the notch in each of the tap portions (102a-113a).

14. The method for manufacturing the battery pack according to any one of claims 11 to 13,
wherein in the step of manufacturing the protection circuit board (22), a board holder to hold the protection circuit board (22) is set to the protection circuit board (22) including electric parts, and a pivot portion is provided at the board holder, and in the step of manufacturing the battery unit (10), the battery unit (10) is made by using a battery holder (21) to hold the plural cell groups, and a bearing portion is provided at the battery holder (21), and in the sub-step of pivotally coupling, the pivot portion is press-fitted into the bearing portion, and then is pivotally coupled.

15. The method for manufacturing the battery pack according to claim 14,
wherein in the step of manufacturing the battery unit (10), an inner surface of the bearing portion formed at the battery holder (21) is partially opened, and in the sub-step of pivotally coupling, the pivot portion is inserted into through an opening portion of the inner surface.

## Patentansprüche

1. Batterieverbund mit:
einer Batterieeinheit (10) mit einer Zellenanordnung (30) mit mehreren Batteriezellen, und mehreren Anschlussplatten (101-114), die mit positiven Anschlüssen und negativen Anschlüssen der mehreren Batteriezellen der Batterieanordnung (30) verbunden sind, wobei die Batteriezellen in jeder von Zellengruppen (31) durch die mehreren Anschlussplatten (101-114) parallel und die Zellengruppen (31) seriell verbunden sind; und
einer Schutz-Leiterplatte (22), die auf einer Oberfläche (11) der Zellenanordnung (30) montiert ist,
wobei jede der Anschlussplatten (101-114) sich zu der einen Oberfläche als jeder von Abgriffsbereichen erstreckt, und jeder der Abgriffsbereiche (102a-113a) so angeordnet ist, dass elektrische Potenziale der Abgriffsbereiche in ansteigender Abfolge oder abnehmender Abfolge in einer Richtung angeordnet sind, und die Schutz-Leiterplatte (22) mehrere Eingangsanschlüsse hat, die in der einen Richtung entsprechend zu den Abgriffsbereichen (102a-113a) angeordnet sind, und eine schwenkbare Struktur auf Seite eines Endbereichs in der einen Richtung auf einer Oberflächenseite vorgesehen ist, an der die Schutz-Leiterplatte (22) angeordnet ist, und wobei jeder der Eingangsanschlüsse mit jedem der dazu entsprechenden Abgriffsbereiche (102a-113a) verbunden ist, und
wobei in der schwenkbaren Struktur bevor jeder der Eingangsanschlüsse mit jedem der dazu entsprechenden Abgriffsbereiche (102a-113a) verbunden wird, die Schutz-Leiterplatte (22) und die Batterieeinheit (10) schwenkbar an einem Endbereich in der einen Richtung als eine Achse in räumlicher Beziehung zueinander gekoppelt werden; und dann die Schutz-Leiterplatte (22) durch Drehung der schwenkbar gekoppelten Schutz-Leiterplatte (22) eingesetzt wird.

2. Batterieverbund nach Anspruch 1,
wobei in der schwenkbaren Struktur die Batterieeinheit (10) und die Schutz-Leiterplatte (22) durch eine Achse senkrecht zu der einen Richtung entlang der einen Oberfläche gekoppelt sind.

3. Batterieverbund nach Anspruch 1 oder 2,
wobei die mehreren Eingangsanschlüsse Anschlussstifte (202-213) aufweisen und die Eingangsanschlüsse elektrisch mit den entsprechenden Abgriffsbereichen (102a-113a) durch die Anschlussstifte (202-213) verbunden sind.

4. Batterieverbund nach Anspruch 3,
wobei die Abgriffsbereiche (102a-113a) entsprechend zu den Anschlussstiften (202-213) Einkerbungsbereiche aufweisen, in denen die Anschlussstifte (202-213) entsprechend eingeführt sind.

5. Batterieverbund nach Anspruch 4,
wobei die an den Abgriffsbereichen (102a-113a) vorgesehenen Einkerbungsbereiche derart ausgebildet sind, dass sie in der Richtung geneigt sind, in der die Einkerbungsbereiche ausgehend von der einen Oberflächenseite aus zu der Seite der Batteriezellen schmäler werden.

6. Batterieverbund nach einem der Ansprüche 1 bis 5,
wobei die Batterieeinheit (10) einen Batteriehalter (21) aufweist, der die Zellenanordnung (30) hält, und wobei die Schutz-Leiterplatte (22) auf einem Platinenhalter gesetzt ist, um die Schutz-Leiterplatte (22) zu halten, und ein Schwenkbereich an dem Platinenhalter und ein Lagerbereich an dem Batteriehalter (21) vorgesehen ist, so dass der Schwenkbereich schwenkbar damit verbunden ist.

7. Batterieverbund nach Anspruch 6,
wobei der Platinen halter Rippenbereiche aufweist, die die Anschlussstifte (202-213) an Positionen zum Kontaktieren der Abgriffsbereiche (102a-113a) jeweils entsprechend zu den Anschlussstiften (202-213) führen.

8. Batterieverbund nach einem der Ansprüche 1 bis 7, wobei die Zellenanordnung (30) in einem Zustand ausgebildet ist, in welchem die positiven Anschlüsse und die negativen Anschlüsse der mehreren Batteriezellen horizontal angeordnet sind, und die mehreren Anschlussplatten (101-114) an Seitenflächen angeordnet sind, an denen die positiven Anschlüsse und die negativen Anschlüsse freiliegen, und die Zellengruppen (31), in denen die gleiche Anzahl der Batteriezellen parallel verbunden sind, durch die mehreren Anschlussplatten (101-114) seriell verbunden sind, und die eine Oberfläche der Zellenanordnung (30) benachbart zu den Seitenflächen ist, und wobei die Schutz-Leiterplatte (22) einen Schutz eines Batteriekreises durch Einspeisung des elektrischen Potenzials in jede der Anschlussplatten (101-114) ausführt.

9. Batterieverbund nach Anspruch 8,
wobei die mehreren Batteriezellen, die die Zellenanordnung (30) bilden, eine erste Gruppe, in der die positiven Anschlüsse an einer ersten Seitenfläche der Seitenflächen freigelegt sind, und eine zweite Gruppe umfassen, in der die negativen Anschlüsse an der ersten Seitenfläche freigelegt sind, und die mehreren Anschlussplatten (101-114) auf der ersten Seitenfläche der Zellenanordnung (30) und auf einer zweiten Seitenfläche, die der ersten Seitenfläche zugewandt ist, angeordnet sind, und wobei die eine Oberfläche benachbart zu beiden Seitenflächen zwischen der ersten Seitenfläche und der zweiten Seitenfläche liegt.

10. Batterieverbund nach Anspruch 9,
wobei in den Batteriezellen, die zu der ersten Gruppe gehören, jede der Zellengruppen (31) eine gleiche Anzahl der Batteriezellen hat, und die erste Gruppe N (N ist eine ganze Zahl gleich 1 oder größer) Elemente der Zellengruppen aufweist, und in den Batteriezellen, die zu der zweiten Gruppe gehören, jede der Zellengruppen die gleiche Anzahl der Batteriezellen aufweist, und wobei die zweite Gruppe N + 1 Elemente der Zellengruppen aufweist,
wobei in der ersten Seitenfläche die negativen Anschlüsse der Zellengruppe, die ein minimales elektrisches Potenzial der zweiten Gruppe hat, mit einem Element der Anschlussplatte verbunden sind, und die positiven Anschlüsse in N Elementen der Zellengruppen, die zu der ersten Gruppe gehören, und die negativen Anschlüsse in N Elementen der Zellengruppen, die zu der zweiten Gruppe gehören, über ein gemeinsames Element der Anschlussplatten durch jede der Zellengruppen verbunden sind,
wobei in der zweiten Seitenfläche, die der ersten Seitenfläche zugewandt ist, die positiven Anschlüsse der Zellengruppen, die das maximale elektrische Potenzial haben, mit einem Element der Anschlussplatte verbunden sind, und die positiven Anschlüsse in N Elementen der Zellengruppen, die zu der ersten Gruppe gehören, und die negativen Anschlüsse in N Elementen der Zellengruppen, die zu der zweiten Gruppe gehören, über ein gemeinsames Element der Anschlussplatte durch jede der Zellengruppen verbunden sind.

11. Verfahren zur Herstellung eines Batterieverbunds, mit:
einem Schritt zur Herstellung einer Batterieeinheit (10), die eine Zellenanordnung (30) mit mehreren Batteriezellen und mehreren Anschlussplatten (101-114) aufweist, die mit positiven Anschlüssen und negativen Anschlüssen der mehreren Batteriezellen der Zellenanordnung (30) verbunden werden, und in der die Batteriezellen in Zellengruppen (31) parallel durch die mehreren Anschlussplatten (101-114) verbunden werden, und die Zellengruppen (31) seriell verbunden werden;
einen Schritt zur Herstellung einer Schutz-Leiterplatte (22), die auf einer Oberfläche der Zellenanordnung (30) montiert wird; und
einem Schritt zur Anbringung der Schutz-Leiterplatte (22) auf der einen Oberfläche der Zellenanordnung (30),
wobei in der Batterieeinheit (10), die im Schritt zur Herstellung der Batterieeinheit (10) hergestellt wird, jede der Anschlussplatten (101-114) sich zu einer Oberfläche als jeder von Abgriffsbereichen erstreckt, und jeder der Abgriffsbereiche (101a-113a) so angeordnet wird, dass elektrische Potenziale der Abgriffsbereiche (101 a-113a) in ansteigender Abfolge oder abnehmender Abfolge in einer Richtung angeordnet werden,
wobei die in dem Schritt zur Herstellung der Schutz-Leiterplatte (22) hergestellte Schutz-Leiterplatte (22) mehrere Eingangsanschlüsse aufweist, die in der einen Richtung entsprechend zu jedem der Abgriffsbereiche (101a-113a) angeordnet werden,
wobei der Schritt zur Anbringung der Schutz-Leiterplatte (22) ferner umfasst:
einen Teilschritt zum schwenkbaren Verbinden, in welchem die Schutz-Leiterplatte (22) und die Batterieeinheit (10) schwenkbar an einem Endbereich in der einen Richtung als eine Achse in räumlicher Beziehung zueinander verbunden werden; und
einen Teilschritt zur Drehung, in welchem die Schutz-Leiterplatte (22) angebracht wird, indem die schwenkbar verbundene Schutz-Leiterplatte (22) gedreht wird,
wobei in dem Teilschritt zum schwenkbaren Verbinden der Eingangsanschluss, der der Achse am nächsten liegt, mit dem entsprechenden Abgriffsbereich verbunden wird, und in dem Teilschritt zum Drehen die anderen Eingangsanschlüsse mit entsprechenden Abgriffsbereichen (102a-113a) in der Abfolge der elektrischen Potenziale verbunden werden.

12. Verfahren zur Herstellung des Batterieverbunds nach Anspruch 11,
wobei in dem Schritt zur Herstellung der Schutz-Leiterplatte (22) Verbindungselemente an jedem der Eingangsanschlüsse vorgesehen und davon herausgeführt werden mit Ausnahme des Eingangsanschlusses, der der Achse am nächsten liegt, und in dem Teilschritt des Drehens das Verbindungselement, das mit jedem der Eingangsanschlüsse verbunden ist, mit jedem der entsprechenden Abgriffsbereiche in der Abfolge der elektrischen Potenziale verbunden wird.

13. Verfahren zur Herstellung des Batterieverbunds nach Anspruch 12,
wobei in dem Schritt zur Herstellung der Schutz-Leiterplatte (22) die Verbindungselemente, die mit den Eingangsanschlüssen verbunden sind, Anschlussstifte (202-213) aufweisen, und die Abgriffsbereiche (102a-113a) der Anschlussplatten (102-113), die in dem Schritt zur Herstellung der Batterieeinheit (10) verwendet werden, Einkerbungen entsprechend zu den Anschlussstiften (202-213) aufweisen, und in dem Teilschritt zum Drehen entsprechend der Drehung der Schutz-Leiterplatte (22) elektrische Verbindungen durch Presspassung der entsprechenden Anschlussstifte (202-213) in die Einkerbung in jedem der Abgriffsbereiche (102a-113a) hergestellt werden.

14. Verfahren zur Herstellung des Batterieverbunds nach einem der Ansprüche 11 bis 13,
wobei in dem Schritt zur Herstellung der Schutz-Leiterplatte (22) ein Platinenhalter zum Halten der Schutz-Leiterplatte (22) an der Schutz-Leiterplatte (22) einschließlich elektrischer Teile angeordnet wird, und ein Schwenkbereich an dem Platinenhalter vorgesehen wird, und in dem Schritt zur Herstellung der Batterieeinheit (10) die Batterieeinheit (10) hergestellt wird, indem ein Batteriehalter (21) zum Halten der mehreren Zellengruppen verwendet wird, und ein Lagerbereich an dem Batteriehalter (21) vorgesehen wird, und in dem Teilschritt zum schwenkbaren Verbinden der Schwenkbereich in den Lagerbereich durch Presspassung eingepasst und anschließend schwenkbar verbunden wird.

15. Verfahren zur Herstellung des Batterieverbunds nach Anspruch 14,
wobei in dem Schritt zur Herstellung der Batterieeinheit (10) eine Innenfläche des Lagerbereichs, der an dem Batteriehalter (21) ausgebildet ist, teilweise geöffnet wird, und in dem Teilschritt des schwenkbaren Verbindens der Schwenkbereich durch einen Öffnungsbereich der Innenfläche eingeführt wird.

## Revendications

1. Bloc de batteries comprenant:
une unité de batterie (10) comportant un assemblage de cellules (30) comportant une pluralité de cellules de batterie et une pluralité de plaques de plomb (101-114) connectées à des bornes positives et des bornes négatives de la pluralité de cellules de batterie de l'assemblage de cellules (30), dans laquelle les cellules de batterie de chaque groupe de cellules (31) sont connectées en parallèle par la pluralité de plaques de plomb (101-114) et les groupes de cellules (31) sont connectés en série ; et
un circuit imprimé de protection (22) monté sur une surface (11) de l'assemblage de cellules (30),
où chacune des plaques de plomb (101-114) s'étend en direction de ladite surface sous forme d'autant de portions de prise, et chacune des portions de prise (102a-113a) est disposée de telle manière que les potentiels électriques des portions de prise sont agencés dans une direction dans l'ordre croissant ou l'ordre décroissant, et le circuit imprimé de protection (22) comporte une pluralité de bornes d'entrée agencées dans une direction correspondant aux portions de prise (102a-113a), et une structure pivotante est prévue du côté d'une partie d'extrémité dans ladite direction sur un côté de la surface où est disposé le circuit imprimé de protection (22), et chacune des bornes d'entrée sont connectées à chacune des portions de prise (102a-113a) correspondantes, et où, dans la structure pivotante, avant de connecter chacune des bornes d'entrée à chacune des portions de prise (102a-113a) correspondantes, le circuit imprimé de protection (22) et l'unité de batterie (10) sont couplés de manière pivotante et espacée au niveau d'une partie d'extrémité dans ladite direction servant d'axe ; puis le circuit imprimé de protection (22) est fixé par une rotation du circuit imprimé de protection (22) couplé de manière pivotante.

2. Bloc de batteries selon la revendication 1,
où dans la structure pivotante, l'unité de batterie (10) et le circuit imprimé de protection (22) sont couplés de manière pivotante autour d'un axe perpendiculaire à ladite direction le long de ladite surface.

3. Bloc de batteries selon la revendication 1 ou 2,
où la pluralité de bornes d'entrée comportent des broches en plomb (202-213) et les bornes d'entrée sont connectées électriquement aux portions de prise (102a-113a) correspondantes par l'intermédiaires des broches en plomb (202-213).

4. Bloc de batteries selon la revendication 3,
où les portions de prise (102a-113a) correspondant aux broches en plomb (202-213) comportent des portions entaillées dans lesquelles les broches en plomb (202-213) sont respectivement insérées.

5. Bloc de batteries selon la revendication 4,
où les portions entaillées prévues au niveau des portions de prise (102a-113a) sont formées de telle manière qu'elles sont inclinées et deviennent plus étroites dans une direction allant du côté de ladite surface au côté des cellules de batterie.

6. Bloc de batteries selon l'une quelconque des revendications 1 à 5,
où l'unité de batterie (10) comporte un support de batterie (21) qui supporte l'assemblage de cellules (30), et le circuit imprimé de protection (22) est fixé sur un support de circuit supportant le circuit imprimé de protection (22), et une portion de pivotement est prévue au niveau du support de circuit, et une portion de palier est prévue au niveau du support de batterie (21) de telle manière qu'elle est couplée avec la portion de pivotement.

7. Bloc de batteries selon la revendication 6,
où le support de circuit comporte des portions de nervure qui guident les broches en plomb (202-213) dans des emplacements dans lesquelles elles entrent en contact avec les portions de prise (102a-113a) correspondant respectivement aux broches en plomb (202-213).

8. Bloc de batteries selon l'une quelconque des revendications 1 à 7,
où l'assemblage de cellules (30) est constituée de telle manière que les bornes positives et les bornes négatives de la pluralité de cellules de batterie sont disposées horizontalement et que la pluralité de plaques en plomb (101-114) sont disposées au niveau de surfaces latérales où les bornes positives et les bornes négatives sont découvertes, et les groupes de cellules (31), dans lesquels le même nombre de cellules de batterie sont connectées en parallèle, sont connectés en série via la pluralité de plaques en plomb (101-114), et ladite surface de l'assemblage de cellules (30) est adjacent aux surfaces latérales, et le circuit imprimé de protection (22) met en oeuvre la protection d'un circuit de batterie en introduisant un potentiel électrique dans chacune des plaques en plomb (101-114).

9. Bloc de batteries selon la revendication 8,
où la pluralité de cellules de batterie qui constituent l'assemblage de cellules (30) comprennent un premier groupe dans lequel les bornes positives sont découvertes au niveau d'une première surface latérale des surfaces latérales, et un second groupe dans lequel les bornes négatives sont découvertes au niveau de la première surface latérale, et la pluralité de plaques en plomb (101-114) sont disposées au niveau de la première surface latérale de l'assemblage de cellules (30) et d'une seconde surface latérale faisant face à la première surface latérale, et ladite surface est adjacente aux deux surfaces latérales que sont la première surface latérale et la seconde surface latérale.

10. Bloc de batteries selon la revendication 9,
où, parmi les cellules de batterie appartenant au premier groupe, chacun des groupes de cellules (31) comporte un nombre égal de cellules de batterie, et le premier groupe comporte N (N est un nombre entier égal à 1 ou plus) groupes de cellules, et parmi les cellules de batterie appartenant au second groupe, chacun des groupes de cellules comporte le nombre égal de cellules de batterie et le second groupe comporte N+1 groupes de cellules,
où, dans la première surface latérale, les bornes négatives du groupe de cellules comportant un potentiel électrique minimal du second groupe sont connectées à un morceau de la plaque de plomb, et les bornes positives de N des groupes de cellules appartenant au premier groupe et les bornes négatives de N des groupes de cellules appartenant au second groupe sont connectées par chacun des groupes de cellules via un morceau commun de la plaque de plomb,
où dans la seconde surface latérale faisant face à la première surface latérale, les bornes positives du groupe de cellules comportant le potentiel électrique maximal sont connectées à un morceau de la plaque de plomb, et les bornes positives de N des groupes de cellules appartenant au premier groupe et les bornes négatives de N des groupes de cellules appartenant au second groupe sont connectées par chacun des groupes de cellules via un morceau commun de la plaque de plomb.

11. Procédé de fabrication d'un bloc de batteries comportant :
une étape consistant à fabriquer une unité de batterie (10) qui comporte un assemblage de cellules (30) comportant une pluralité de cellules de batterie et une pluralité de plaques de plomb (101-114) connectées à des bornes positives et des bornes négatives de la pluralité de cellules de batterie de l'assemblage de cellules (30), et dans laquelle les cellules de batterie de chaque groupe de cellules (31) sont connectées en parallèle par la pluralité de plaques de plomb (101-114) et les groupes de cellules (31) sont connectés en série ;
une étape consistant à fabriquer un circuit imprimé de protection (22) monté sur une surface de l'assemblage de cellules (30) ; et
une étape consistant à fixer le circuit imprimé de protection (22) sur ladite surface de l'assemblage de cellules (30),
où dans l'unité de batterie (10) fabriquée à l'étape de fabrication de l'unité de batterie (10), chacune des plaques de plomb (101-114) s'étend en direction de ladite surface en tant qu'autant de portions de prise, et chacune des portions de prise (101a-113a) est disposée de telle manière que les potentiels électriques des portions de prise (101a-113a) sont agencés, dans une direction, dans l'ordre croissant ou l'ordre décroissant,
où le circuit imprimé de protection (22) fabriqué à l'étape de fabrication du circuit imprimé de protection (22) comporte une pluralité de bornes d'entrée agencées dans la direction correspondant à chacune des portions de prise (102a-113a),
l'étape de placement du circuit imprimé de protection (22) comportant en outre :
une sous-étape de couplage pivotant, lors de laquelle le circuit imprimé de protection (22) et l'unité de batterie (10) sont couplés de manière pivotante et espacée au niveau d'une partie d'extrémité dans ladite direction servant d'axe ; et
une sous-étape de rotation, lors de laquelle le circuit imprimé de protection (22) est fixé par une rotation du circuit imprimé de protection (22) couplé de manière pivotante,
où lors de la sous-étape de couplage pivotant, la borne d'entrée la plus proche de l'axe est connectée à la portion de prise correspondante et lors de l'étape de rotation, les autres bornes d'entrée sont connectées aux portions de prise (102a-113a) correspondantes dans l'ordre des potentiels électriques.

12. Procédé de fabrication du bloc de batteries selon la revendication 11,
où lors de l'étape de fabrication du circuit imprimé de protection (22), des organes de connexion sont prévus au niveau de et s'étendent à partir de chacune des bornes d'entrée à l'exception de la borne d'entrée la plus proche de l'axe, et lors de la sous-étape de rotation, l'organe de connexion connecté à chacune des bornes d'entrée est connecté à chacune des portions de prise correspondantes dans l'ordre des potentiels électriques.

13. Procédé de fabrication du bloc de batteries selon la revendication 12,
où lors de l'étape de fabrication du circuit imprimé de protection (22), les organes de connexion connectés aux bornes d'entrée incluent des broches en plomb (202-213) et les portions de prise (102a-113a) des plaques en plomb (102-113) utilisées lors de l'étape de fabrication de l'unité de batterie (10) comportent des entailles correspondant aux broches en plomb (202-213), et lors de la sous-étape de rotation du circuit imprimé de protection (22), les connexions électriques sont réalisées en pressant les broches en plomb (202-213) correspondantes dans l'entaille de chacune des portions de prise (102a-113a).

14. Procédé de fabrication du bloc de batteries selon l'une quelconque des revendications 11 à 13,
où lors de l'étape de fabrication du circuit imprimé de protection (22), un support de circuit destiné à supporter le circuit imprimé de protection (22) est fixé au circuit imprimé de protection (22) comprenant des composants électriques, et une portion pivotante est prévue au niveau du support de circuit, et lors de l'étape de fabrication de l'unité de batterie (10), l'unité de batterie (10) est fabriquée en utilisant un support de batterie (21) pour supporter la pluralité de groupes de cellules, et une portion de palier est prévue au niveau du support de batterie (21), et lors de la sous-étapes de couplage pivotant, la portion de pivotement est pressée dans la portion de palier et est ensuite couplée de manière pivotante.

15. Procédé de fabrication du bloc de batteries selon la revendication 14,
où lors de l'étape de fabrication de l'unité de batterie (10), une surface intérieure de la portion de palier formée au niveau du support de batterie (21) est partiellement ouverte, et lors de la sous-étape de couplage pivotant, la portion de pivotement est insérée à travers une portion d'ouverture de la surface intérieure.
